# FASCICULE DE BREVET EUROPEEN

(11) **EP 3 662 090 B1**
(45) Date de publication et mention de la délivrance du brevet: **30.06.2021**
(21) Numéro de dépôt: 18778963.1
(22) Date de dépôt: 06.09.2018
(51) Int. Cl.: C22B 3/26, C22B 3/00

(54) **PROCÉDÉ AMÉLIORÉ DE RÉCUPÉRATION DU PALLADIUM DES AUTRES ÉLÉMENTS MÉTALLIQUES PRÉSENTS DANS UNE PHASE AQUEUSE NITRIQUE UTILISANT COMME EXTRACTANTS DES MALONAMIDES**
VERBESSERTES VERFAHREN ZUR RÜCKGEWINNUNG VON PALLADIUM AUS ANDEREN, IN EINER WÄSSRIGEN STICKSTOFFPHASE VORHANDENEN METALLELEMENTEN UNTER VERWENDUNG VON MALONAMIDEN ALS EXTRAKTIONSMITTEL
IMPROVED METHOD FOR RECOVERING PALLADIUM FROM OTHER METAL ELEMENTS PRESENT IN A NITRIC AQUEOUS PHASE USING MALONAMIDES AS EXTRACTANTS

(30) Priorité: 07.09.2017 FR 1758240
(43) Date de publication de la demande: 10.06.2020
(73) Titulaire: Commissariat à l'énergie atomique et aux énergies alternatives, 75015 Paris (FR)
(72) Inventeur: BOURGEOIS, Damien, 30390 Aramon (FR); MEYER, Daniel, 30150 Saint-Genies De Comolas (FR)
(74) Mandataire: Brevalex
(86) Numéro de dépôt international: PCT/FR2018/052182
(87) Numéro de publication internationale: WO 2019/048789

(56) Documents cités:
- WO-A1-2016/008932
- FR-A1- 2 968 014
- RÉMI POIROT ET AL: "Palladium Extraction by a Malonamide Derivative (DMDOHEMA) from Nitrate Media: Extraction Behavior and Third Phase Characterization", SOLVENT EXTRACTION AND ION EXCHA, TAYLOR & FRANCIS GROUP LLC, US, vol. 32, no. 5, 28 avril 2014 (2014-04-28) , pages 52-542, XP009181062, ISSN: 0736-6299, DOI: 10.1080/07366299.2014.908587
- PAIVA A P ET AL: "Application of N,N'-tetrasubstituted malonamides to the recovery of iron(III) from chloride solutions", HYDROMETALLURGY, ELSEVIER SCIENTIFIC PUBLISHING CY. AMSTERDAM, NL, vol. 77, no. 1-2, 1 avril 2005 (2005-04-01), pages 103-108, XP027652495, ISSN: 0304-386X [extrait le 2005-04-01]
- RÉMI POIROT ET AL: "Metal Recognition Driven by Weak Interactions: A Case Study in Solvent Extraction", CHEMPHYSCHEM - A EUROPEAN JOURNAL OF CHEMICAL PHYSICS & PHYSICALCHEMISTRY., vol. 17, no. 14, 27 mai 2016 (2016-05-27), pages 2112-2117, XP055486878, DE ISSN: 1439-4235, DOI: 10.1002/cphc.201600305

## Description

### DOMAINE TECHNIQUE

La présente invention appartient au domaine technique du recyclage du palladium et, plus particulièrement, à l'utilisation d'au moins une étape de lavage pour augmenter le facteur de séparation entre le palladium et les autres éléments métalliques contenus dans une solution aqueuse nitrique, issue notamment du recyclage des déchets d'équipements électriques et électroniques et ce, dans une opération d'extraction liquide-liquide.

Plus particulièrement, la présente invention propose un procédé permettant de séparer puis de récupérer sélectivement le palladium présent, dans une solution aqueuse nitrique, en mélange avec d'autres éléments métalliques et ce, en utilisant comme extractants au moins un malonamide et au moins une étape de lavage de la phase organique qui contient le palladium et au moins un malonamide. La présente invention trouve des applications dans le traitement des déchets d'équipements électriques et électroniques et leur recyclage.

### ÉTAT DE LA TECHNIQUE ANTÉRIEURE

Le palladium (Pd) est un métal semi-précieux dont l'approvisionnement reste stratégique en raison d'une localisation géographique des gisements et, par conséquent, de la production, limitée à quelques pays (principalement Russie 41% et Afrique du Sud 36%). En outre, même si le palladium n'apparaît pas comme un métal stratégique dans les analyses de l'UE, des tensions peuvent exister sur le marché du palladium en raison de la fin des stocks détenus par la Russie qui permettaient de détendre le marché, ainsi que de l'accroissement régulier de la demande en palladium. Aussi, l'ensemble des métaux du groupe du platine, notamment le platine (Pt), le palladium et le rhodium (Rh) est lui considéré comme stratégique par l'UE et les USA, plutôt en raison du platine, mais la production de ces trois métaux est intimement liée.

Le palladium est un métal qui présente des propriétés catalytiques intéressantes, et une bonne résistance à la corrosion. Il sert principalement dans la confection de pots catalytiques pour l'automobile (67%). Les autres applications sont : l'électronique (12%), l'industrie chimique (5%), la réparation dentaire (5%) et la joaillerie (4%). Ce métal noble sert aussi de placement financier (10% de la demande en 2010, quantité négligeable en 2013). L'évolution de la demande en palladium est essentiellement assurée par la croissance du marché automobile.

On estime à un quart environ la quantité de palladium consommée annuellement provenant du recyclage. Ce recyclage concerne exclusivement les pots catalytiques, une source homogène de palladium, traitée en milieu chlorhydrique. L'exploitation de nouvelles filières de recyclage devrait donc être un domaine d'intérêt économique prochain. La valorisation des déchets d'équipements électriques et électroniques (ou DEEE) également désignés par l'expression « la mine urbaine » est une thématique en plein essor, et représente une source potentielle importante de palladium (deuxième marché d'application). Les études de recyclage de ces matériaux se dirigent selon deux axes : pyrochimie/pyrométallurgie et hydrométallurgie. En ce qui concerne l'hydrométallurgie, différentes technologies peuvent être employées comme, par exemple, l'extraction liquide-liquide, l'électrochimie, les membranes liquides supportées ou encore les résines échangeuses d'ions.

Dans le cas de l'hydrométallurgie, l'or présent dans les circuits imprimés impose une dissolution en milieu acide oxydant, et le seul acide chlorhydrique utilisé pour le recyclage des pots catalytiques ne convient plus. Plusieurs solutions sont envisagées, comme les mélanges chlorhydrique/nitrique ou sulfurique/eau oxygénée.

Dans l'état de la technique, l'utilisation d'une phase organique contenant un malonamide pour séparer, récupérer ou extraire du palladium d'une phase aqueuse dans laquelle il se trouve est connue. Les malonamides ont été testés avec succès à l'échelle pilote dans plusieurs procédés en milieu nitrique et il a été montré que le palladium est bien extrait par les malonamides. De plus, le comportement du palladium en extraction liquide-liquide par le *N,N'*-diméthyl-*N,N'*-dioctylhexyléthoxymalonamide (ou DMDOHEMA) a fait l'objet d'une publication **[1].** Enfin, il a déjà été établi que le palladium est co-extrait, lors d'un procédé de récupération sélective de l'américium développé par la Demanderesse, avec les lanthanides, ce qui nécessite l'ajout d'acide N-(2-hydroxyéthyl)éthylène diamine triacétique (ou HEDTA) dans la phase aqueuse **[2].**

Par ailleurs, la Demanderesse a mis au point un procédé utilisant une phase organique contenant un malonamide et, plus particulièrement, un malonamide qui ne contient pas d'atome de soufre pour séparer et purifier sélectivement le palladium contenu en mélange avec d'autres éléments métalliques dans une solution aqueuse nitrique **[3].**

Dans toutes les données disponibles avant que le procédé décrit dans **[3]** ne soit proposé, soit le palladium était co-extrait avec les lanthanides, soit il était séquestré en phase aqueuse et les lanthanides étaient extraits. Les malonamides et, plus particulièrement, les malonamides dépourvus d'atomes de soufre n'étaient pas connus pour être des extractants spécifiques du palladium : ils avaient été développés dans le cadre de l'extraction des lanthanides et des actinides, des cations définis comme des « cations durs » selon la théorie HSAB (pour « Hard and Soft Acid and Base », théorie développée par Pearson **[4]**), alors que le palladium est un cation classé comme « mou ».

Ainsi, rien ne suggérait à l'homme du métier d'utiliser un malonamide pour récupérer sélectivement le palladium à partir d'une solution aqueuse nitrique contenant d'autres cations métalliques. Il est donc assez surprenant de constater que le palladium peut être extrait, de manière sélective, par rapport à plusieurs cations métalliques, dont les lanthanides, simplement en ajustant la teneur en acide nitrique de la phase aqueuse et ce, à une concentration en acide nitrique inférieure ou égale à 3 mol.L⁻¹.

Toutefois, dans le procédé de récupération décrit dans **[3],** si l'étape (c) de désextraction est répétée notamment en courants croisés, certains des autres cations initialement présents dans la solution aqueuse nitrique et entraînés dans la phase organique comme le fer sont également désextraits lors de ladite étape (c) (voir partie expérimentale ci-après). Aussi, en tenant compte de la différence de concentration initiale entre le palladium (100 mg/L) et le fer (2000 mg/L) dans les solutions issues du traitement des déchets d'équipements électriques et électroniques, on observe que la quantité de fer extraite est importante et même supérieure à celle du palladium dans la phase organique.

Les inventeurs se sont donc fixé pour but d'améliorer encore le procédé de récupération du palladium décrit dans WO 2016/008932 A1 **[3]** en mettant au point un procédé ne présentant pas les inconvénients décrits ci-dessus et permettant de séparer et de purifier efficacement et sélectivement le palladium contenu dans une solution aqueuse nitrique contenant, en plus du palladium, d'autres cations tels que des cations métalliques.

### EXPOSÉ DE L'INVENTION

Ce but et d'autres encore sont atteints par la présente invention qui propose un procédé de récupération du palladium des autres éléments métalliques contenus dans une phase aqueuse nitrique via une extraction liquide-liquide utilisant une phase organique contenant, comme extractant, au moins un malonamide et présentant au moins une étape de lavage de la phase organique obtenue suite à l'étape d'extraction sélective.

En effet, les inventeurs ont montré qu'il est possible d'augmenter encore la sélectivité de la récupération du palladium à partir des solutions nitriques issues du traitement des déchets d'équipements électriques et électroniques en procédant à un lavage sélectif de la phase organique obtenue suite à l'étape d'extraction. Cette étape de lavage peut être considérée comme une étape de désextraction sélective du ou des élément(s) métallique(s) différent(s) du palladium et entraîné(s) dans la phase organique lors de l'étape d'extraction.

Cette étape de lavage ne nécessite l'emploi d'aucun chélateur spécifique de ce ou ces élément(s) métallique(s) différent(s) du palladium. De fait, on s'affranchit de tout organique dans le procédé de récupération. Ce dernier ne nécessite qu'une gestion d'effluents de volume relativement faible du fait du rapport O/A mis en œuvre lors de cette étape de lavage.

Par ailleurs, les étapes d'extraction et de désextraction mises en œuvre dans le cadre du procédé selon la présente invention peuvent être mises en œuvre aussi bien à courants croisés qu'à contre-courant, sauf mention explicite contraire.

Ainsi, la présente invention concerne un procédé pour récupérer le palladium à partir d'une phase aqueuse nitrique qui contient, en plus du palladium, au moins un autre cation métallique dont la valence est supérieure ou égale à 2, ledit procédé comprenant les étapes suivantes consistant à :
a) éventuellement la dilution de la phase aqueuse nitrique qui contient, en plus du palladium, au moins un autre cation métallique dont la valence est supérieure ou égale à 2 de manière à ce que la concentration en acide nitrique contenue dans cette phase aqueuse nitrique après dilution soit au plus de 3 mol.L⁻¹ ;
b) l'extraction du palladium de ladite phase aqueuse nitrique éventuellement diluée à l'étape (a), laquelle extraction comprend au moins une opération dans laquelle ladite phase aqueuse nitrique est mise en contact avec une phase organique non miscible à elle, contenant au moins un malonamide exempt d'atome de soufre en tant qu'extractant, puis séparée de cette phase organique ;
c) la désextraction d'au moins un autre cation métallique dont la valence est supérieure ou égale à 2 présent dans la phase organique issue de l'étape (b), laquelle désextraction comprend au moins une opération dans laquelle la phase organique issue de l'étape (b) est mise en contact avec une phase aqueuse, le rapport O/A lors de cette mise en contact étant supérieur ou égal à 4 ; puis
d) la désextraction sélective du palladium présent dans la phase organique issue de l'étape (c), laquelle désextraction comprend au moins une opération dans laquelle la phase organique issue de l'étape (c) est mise en contact avec une phase aqueuse, puis séparée de cette phase aqueuse.

Par « rapport O/A », on entend le rapport entre le volume ou le débit (si les phases mises en présence sont circulantes) de la phase organique et le volume ou le débit de la phase aqueuse. L'étape (c) du procédé de la présente invention se distingue clairement de l'étape (c) du procédé décrit dans [3] puisque, dans ce dernier, le rapport O/A est au plus égal à 3. Les inventeurs ont montré qu'en utilisant un rapport O/A supérieur ou égal à 4, il est possible de désextraire sélectivement le ou les autre(s) cation(s) métallique(s) présent(s) dans la phase organique tout en maintenant, dans cette phase, le palladium.

Comme déjà évoqué pour le procédé décrit dans [3], si la phase aqueuse nitrique contient un ou plusieurs lanthanide(s), ce ou ces dernier(s) reste(nt) dans la solution aqueuse nitrique, suite à la mise en contact avec la phase organique contenant au moins un malonamide comme extractant. De plus, le procédé selon la présente invention ne nécessite pas d'ajouter un quelconque complexant sélectif des autres cations multivalents présents dans la phase aqueuse nitrique, tel que, par exemple, l'EDTA.

On rappelle que, dans le domaine des extractions liquide-liquide, c'est-à-dire utilisant la différence de solubilité des éléments chimiques que l'on cherche à séparer entre une phase aqueuse et une phase organique :
- le coefficient de distribution entre deux phases, organique et aqueuse, d'un élément métallique M, noté D_{M}, correspond au rapport entre la concentration (ou activité) que présente cet élément dans la phase organique et la concentration que présente ce même élément dans la phase aqueuse ;
- le facteur d'extraction d'un élément métallique M, noté E_{M}, correspond à O/A * D_{M}, c'est-à-dire au produit du rapport entre le volume ou le débit (si les phases mises en présence sont circulantes) de la phase organique et le volume ou le débit de la phase aqueuse par le coefficient de distribution D_{M} de ce même élément ; et
- le facteur de séparation entre deux éléments métalliques M1 et M2, noté FS_{M1/M2} correspond à D_{M1/}D_{M2}, c'est-à-dire au rapport entre le coefficient de distribution de l'élément M1 et le coefficient de distribution de l'élément M2.

Dans le cadre de la présente invention, l'étape (a) du procédé est optionnelle. En effet, si la concentration en acide nitrique de la phase aqueuse nitrique contenant du palladium et au moins un autre cation métallique dont la valence est supérieure ou égale à 2 est, avant la mise en œuvre du procédé de récupération sélective selon l'invention, inférieure ou égale à 3 mol.L⁻¹, il n'est pas nécessaire d'encore diluer cette phase. Au contraire, si la concentration en acide nitrique est supérieure à 3 mol.L⁻¹, il convient de diluer la phase aqueuse nitrique par ajout d'eau pour ramener la concentration dans la gamme souhaitée.

Dans le cadre de la présente invention, la phase aqueuse nitrique utilisée lors de l'étape (b) se caractérise par la présence de différents éléments métalliques parmi lesquels on trouve du palladium et au moins un autre cation métallique dont la valence est supérieure ou égale à 2 et par la quantité ajustée d'acide nitrique.

Avantageusement, la quantité d'acide nitrique dans la phase aqueuse nitrique est inférieure ou égale à 3 mol.L⁻¹, notamment inférieure ou égale à 2,5 mol.L⁻¹ et, en particulier comprise entre 0,1 mol.L⁻¹ et 2 mol.L⁻¹. Dans un mode de réalisation particulier, la solution aqueuse nitrique mise en œuvre dans le cadre de la présente invention contient de l'acide nitrique à une concentration de l'ordre de 1 mol.L⁻¹ (i.e. 1 mol.L⁻¹ ± 0,25 mol.L⁻¹). Les quantités d'acide nitrique précédemment données s'entendent préalablement à la mise en contact avec la phase organique. En effet, une certaine quantité d'acide nitrique peut être extraite dans la phase organique par l'extractant malonamide.

Toute phase aqueuse nitrique contenant différents éléments métalliques parmi lesquels on trouve du palladium et au moins un autre cation métallique dont la valence est supérieure ou égale à 2 est utilisable dans le cadre de la présente invention. La phase aqueuse nitrique utilisée dans le cadre du procédé selon l'invention est avantageusement une solution aqueuse nitrique issue du traitement des déchets d'équipements électriques et électroniques (DEEE). Ainsi, cette phase aqueuse nitrique comprend non seulement du palladium mais aussi au moins un élément métallique choisi dans le groupe constitué par le fer (Fe), le cuivre (Cu), le zinc (Zn), l'aluminium (Al), le plomb (Pb), le nickel (Ni), l'argent (Ag), le cobalt (Co), le néodyme (Nd), le lanthane (La), le dysprosium (Dy), l'ytterbium (Yb) et le chrome (Cr). La quantité de chacun de ces éléments métalliques et notamment la quantité de palladium dans la phase aqueuse nitrique dépendra de l'origine de la phase aqueuse nitrique et notamment de la nature des déchets d'équipements électriques et électroniques et du traitement qu'ils ont subi.

Typiquement, les déchets d'équipements électriques et électroniques sont broyés, éventuellement soumis à une attaque acide, par exemple, par de l'acide chlorhydrique ou de l'acide sulfurique puis soumis à une attaque oxydante par de l'acide nitrique notamment à une quantité comprise entre 3 mol.L⁻¹ et 6 mol.L⁻¹ et ce, afin de dissoudre des éléments métalliques tels que l'or, l'argent, le palladium et certains lanthanides. La phase aqueuse nitrique mise en œuvre dans le procédé selon la présente invention correspond donc à la solution obtenue suite à un tel traitement i.e. une eau de lixiviation des broyats de déchets d'équipements électriques et électroniques.

Cette phase aqueuse peut éventuellement avoir subi un prétraitement pour en retirer déjà certains cations métalliques. En effet, selon le procédé choisi, certains éléments majoritaires comme le cuivre ou le fer, ou encore l'or pour son importante valeur, peuvent être sélectivement extraits par des techniques classiques d'hydrométallurgie. A titre d'exemple, Jung *et al.* ont proposé un procédé de récupération sélective préalable de l'or utilisant du dibutyl carbitol comme extractant [5], qui conduit à une solution acide résiduelle comprenant du palladium mélangé à d'autres cations comme le zinc, le cuivre, l'argent ou le platine.

De façon générale et notamment eu égard à ce qui précède, le palladium présent dans la phase aqueuse nitrique préalablement à la mise en œuvre du procédé de préparation se présente sous forme oxydée i.e. sous forme de cations Pd²⁺. Ce dernier peut être éventuellement présent en partie sous forme de complexes avec les anions nitrate ou chlorure présents dans la solution.

De plus, le fait que la phase aqueuse nitrique mise en œuvre dans le procédé selon la présente invention doive contenir une quantité en acide nitrique telle que précédemment définie i.e. inférieure ou égale à 3 mol.L⁻¹ apparaît comme un compromis optimal : la dissolution lors de l'attaque oxydante des déchets d'équipements électriques et électroniques s'opère à des concentrations en acide nitrique relativement élevées (3 mol.L⁻¹ minimum), donc l'ajustement à une concentration plus faible peut s'envisager par simple dilution. Dans ce cas, travailler à une quantité d'acide nitrique dans la phase aqueuse nitrique de 1 mol.L⁻¹ permet à la fois de ne pas opérer de dilution trop importante, tout en garantissant une excellente sélectivité.

La phase aqueuse nitrique mise en œuvre lors de l'étape (b) du procédé selon la présente invention peut ne contenir, comme acide, que de l'acide nitrique. En variante, cette phase aqueuse nitrique peut contenir, en plus de l'acide nitrique, au moins un autre acide notamment choisi dans le groupe constitué par l'acide chlorhydrique, l'acide bromhydrique, l'acide fluorhydrique et l'acide sulfurique. De plus, que cette phase aqueuse nitrique contienne ou non au moins un autre acide différent de l'acide nitrique, elle peut en outre contenir de l'eau oxygénée (ou H₂O₂).

Dans le cadre de l'étape (b) du procédé de séparation selon la présente invention, l'extractant contenu dans la phase organique non miscible à l'eau se présente sous la forme d'un malonamide exempt d'atome de soufre ou de plusieurs malonamides exempts d'atome de soufre différents. Ce ou ces dernier(s) est/sont capable(s) de former des complexes avec le palladium présent dans la phase aqueuse nitrique et, plus particulièrement, avec le nitrate de palladium présent dans cette phase.

Dans le cadre de la présente invention, sont explicitement exclus, des extractants utilisés seuls, les diamides soufrés tels que les dithiodiglycolamides précédemment évoqués. A noter qu'un tel diamide soufré ou un mélange de diamides soufrés différents peuvent cependant être utilisés, dans le cadre de la présente invention, en mélange avec au moins un malonamide exempt d'atome de soufre.

Par « malonamide exempt d'atome de soufre », on entend un diamide substitué de formule (I) :

R¹(R²)N-C(=O)-CH(R³)-C(=O)-N(R⁴)R⁵ (I)

dans laquelle les groupements R¹, R², R³, R⁴ et R⁵, identiques ou différents, représentent un alkyle ou un hétéroalkyle, exempt d'atome de soufre.

Dans le cadre de la présente invention, on entend, par « groupe alkyle », un groupe alkyle, linéaire, ramifié ou cyclique, comprenant de 1 à 20 atomes de carbone, notamment de 1 à 18 atomes de carbone et en particulier, de 1 à 15 atomes de carbone.

Dans le cadre de la présente invention, on entend, par « groupe hétéroalkyle », un groupe hétéroalkyle, linéaire, ramifié ou cyclique, comprenant de 1 à 20 atomes de carbone, notamment de 1 à 18 atomes de carbone et en particulier, de 1 à 15 atomes de carbone, le ou les hétéroatomes pouvant être un atome d'azote, un atome d'oxygène ou un atome de phosphore, notamment un atome d'azote ou un atome d'oxygène et, en particulier, un atome d'oxygène. Le ou les hétéroatome(s) peu(ven)t en particulier interrompre une chaîne alkyle et/ou séparer une chaîne alkylène et une chaîne alkyle. En particulier, dans le cadre de la présente invention, un hétéroalkyle est un alkyle tel que précédemment défini interrompu par un atome d'oxygène.

Conformément à l'invention, le malonamide exempt d'atome de soufre mis en œuvre est, de préférence, choisi parmi les malonamides dans lesquels le nombre total d'atomes de carbone que présentent ensemble les groupements R¹, R², R³, R⁴ et R⁵ est supérieur ou égal à 20 et notamment supérieur ou égal à 22. En effet, de tels malonamides présentent un caractère hydrophobe suffisant pour être utilisé en phase organique non miscible à l'eau.

Avantageusement, le malonamide exempt d'atome de soufre mis en œuvre dans le cadre de la présente invention est un malonamide de formule (I) telle que précédemment définie dans laquelle les groupements R¹ et R⁵ sont identiques et les groupements R² et R⁴ sont identiques, les groupements R¹ et R⁴ pouvant être identiques ou différents.

En particulier, le malonamide exempt d'atome de soufre mis en œuvre dans le cadre de la présente invention est un malonamide de formule (I) telle que précédemment définie dans laquelle les groupements R¹, R², R⁴ et R⁵ sont tels que précédemment définis et dans laquelle le groupement R³ est un alkyle ou un hétéroalkyle et notamment un alkyle interrompu par un atome d'oxygène.

Plus particulièrement, le malonamide exempt d'atome de soufre mis en œuvre dans le cadre de la présente invention est choisi dans le groupe constitué par le *N,N'*-diméthyl-*N,N'*-dibutyltétradécylmalonamide (ou DMDBTDMA), le *N,N'*-diméthyl-*N,N'-*dioctylhexyléthoxymalonamide (ou DMDOHEMA), le *N,N'*-diméthyl-*N,N'-*dioctyloctylmalonamide (ou DMDOOMA), le *N,N'*-diméthyl-*N,N'*-dioctylhexylmalonamide (ou DMDOHxMA), le *N,N'*-diméthyl-*N,N'*-dioctylheptylmalonamide (ou DMDOHpMA), le *N,N'*-diméthyl-*N,N'*-dibutyl-dodécylmalonamide (ou DMDBDDEMA) et le *N,N'*-diméthyl-*N,N'*-dibutyl-tetradécylmalonamide (ou DMDBTDEMA).

Plus particulièrement encore, le malonamide exempt d'atome de soufre mis en œuvre dans le cadre de la présente invention est le DMDOHEMA ou le DMDBTDEMA.

Dans le cadre de l'étape (b) du procédé selon l'invention, le malonamide exempt d'atome de soufre est présent dans la phase organique en une quantité supérieure ou égale à 40 mM, notamment en une quantité supérieure ou égale à 60 mM, en particulier en une quantité comprise entre 80 mM et 2 M et, plus particulièrement, en une quantité comprise entre 100 mM et 1 M. Lorsque la phase organique comprend plusieurs malonamides différents et notamment plusieurs malonamides exempts d'atome de soufre différents, la quantité totale de malonamides dans la phase organique est supérieure ou égale à 40 mM, notamment supérieure ou égale à 60 mM, en particulier comprise entre 80 mM et 2 M et, plus particulièrement, comprise entre 100 mM et 1 M.

Enfin, la phase organique non miscible à l'eau utilisée dans le cadre de l'étape (b) du procédé selon la présente invention contient au moins un malonamide exempt d'atome de soufre tel que précédemment défini, comme extractant, dans un diluant organique. Avantageusement, ce diluant organique est choisi parmi les diluants organiques polaires ou aliphatiques dont l'utilisation a déjà été proposée pour la réalisation d'extractions liquide-liquide. Plus particulièrement, ce diluant organique est choisi dans le groupe constitué par le cyclopentane, le pentane, le cyclohexane, le n-hexane, le cycloheptane, le n-heptane, le n-octane, l'iso-octane, les nonanes ou les dodécanes, linéaires ou ramifiés (tels que le n-dodécane), l'hexadécane, l'éther de pétrole, le benzène, le n-butylbenzène, l'isobutylbenzène, le sec-butylbenzène, le tert-butylbenzène, le p-cymène, le triisopropylbenzène, le toluène, le xylène, les cumènes, le kérosène, le tétrapropylène hydrogéné (ou TPH), le diéthyl éther, le n-butyl acétate, l'isopropyl myristate et leurs mélanges. Finalement, le diluant organique peut comprendre en tout ou partie un sel fondu i.e. un sel possédant une température de fusion inférieure à 100°C, souvent même inférieure à la température ambiante. Par « température ambiante », on entend une température de 20°C ± 5°C. Ces sels fondus peuvent être employés comme substituts aux diluants organiques tels que définis ci-dessus dans les opérations d'extraction liquide-liquide et sont généralement constitués d'un cation organique et d'un anion qui peut être organique ou inorganique. A titre d'exemples illustratifs et non limitatifs de sels fondus utilisables comme solvant de la phase organique mise en œuvre lors de l'étape (b) du procédé selon l'invention, on peut citer les composés constitués d'un cation de la famille des N,N-dialkylpiperidiniums, N-alkylpyridiniums ou N,N'-dialkylimidazoliniums, et d'un anion hexafluorophosphate ou bis(trifluorométhanesulfonyl)imide.

Lors de l'étape (b) du procédé selon l'invention, le rapport volumique ou de débit entre la phase organique et la phase aqueuse nitrique (rapport O/A) est compris entre 1/3 et 3, notamment entre 0,5 et 2 et, en particulier, de l'ordre de 1 (i.e. 1 ± 0,2). De plus, durant cette étape (b), la mise en contact entre la phase aqueuse nitrique et la phase organique dure entre 15 min et 2 h, notamment entre 30 min et 90 min et, en particulier, de l'ordre de 60 min (i.e. 60 min ± 10 min).

L'étape (b) du procédé selon la présente invention est réalisée à une température généralement inférieure à 80°C, en particulier comprise entre 10°C et 70°C. Dans une forme de mise en œuvre particulière, la température lors de ce procédé de séparation est la température ambiante.

Dans le cadre du procédé selon la présente invention, l'étape (c) est une étape de lavage de la phase organique obtenue suite à l'étape (b). Cette phase organique contient au moins un malonamide exempt de soufre tel que précédemment défini, du palladium et au moins un autre cation métallique dont la valence est supérieure ou égale à 2. Cet autre cation est notamment choisi dans le groupe constitué par un cation ferreux, un cation ferrique, un cation cuivrique, un cation nickel, un cation aluminium, un cation plombeux, ou un cation zinc. Lors de cette étape de lavage, les cations métalliques différents du palladium sont désextraits, de façon sélective, de la phase organique.

Avantageusement, la phase aqueuse mise en œuvre lors de l'étape (c) du procédé selon l'invention est soit de l'eau, soit une solution aqueuse d'acide nitrique. La solution aqueuse nitrique mise en œuvre lors de l'étape (c) est une solution aqueuse comprenant de l'acide nitrique en une quantité comprise entre 0,5 et 2 M et notamment entre 1 et 1,5 M.

Lors de l'étape (c) du procédé selon l'invention, l'opération de mise en contact de la phase organique avec une phase aqueuse telle que définie ci-dessus peut être répétée au moins une fois. A chaque nouvelle mise en contact, la phase aqueuse utilisée peut être identique ou différente à la phase aqueuse utilisée lors de la mise en contact précédente. Ainsi, lorsque la mise en contact est répétée deux fois, il est possible d'utiliser
(i) de l'eau comme phase aqueuse lors des deux mises en contact,
(ii) une solution aqueuse d'acide nitrique comme phase aqueuse lors des deux mises en contact,
(iii) de l'eau comme phase aqueuse lors de la 1^{ère} mise en contact puis une solution aqueuse d'acide nitrique comme phase aqueuse lors de la 2^{nde} mise en contact, ou encore
(iv) une solution aqueuse d'acide nitrique comme phase aqueuse lors de la 1^{ère} mise en contact puis de l'eau comme phase aqueuse lors de la 2^{nde} mise en contact.

Avantageusement, lorsque l'étape (c) du procédé selon l'invention comprend deux opérations de mise en contact, de l'eau est utilisée comme phase aqueuse lors de la 1^{ère} mise en contact puis une solution aqueuse d'acide nitrique est utilisée comme phase aqueuse lors de la 2^{nde} mise en contact.

Dans un 1^{er} mode de réalisation de l'étape (c) du procédé selon l'invention et notamment lorsque cette étape est réalisée à contre-courant, le rapport O/A est inférieur à 7 et notamment inférieur à 6 et, en particulier, inférieur à 5. Typiquement, l'étape (c) du procédé selon l'invention est réalisée à contre-courant, le rapport O/A vaut 4.

Dans un 2^{nd} mode de réalisation de l'étape (c) du procédé selon l'invention et notamment lorsque cette étape est réalisée à courants croisés, le rapport O/A est supérieur ou égal à 7, notamment supérieur à 7 et inférieur ou égal à 10 et, en particulier, supérieur ou égal à 8 et inférieur ou égal à 10.

De plus, durant cette étape (c), la ou les mise(s) en contact entre la phase aqueuse et la phase organique dure(nt) entre 15 min et 2 h, notamment entre 30 min et 90 min et, en particulier, de l'ordre de 60 min (i.e. 60 min ± 10 min).

L'étape (c) du procédé selon la présente invention est réalisée à une température généralement inférieure à 50°C, en particulier inférieure à 40°C et, plus particulièrement, inférieure à 30°C. Avantageusement, la température lors de cette étape (c) est la température ambiante.

L'étape (d) de désextraction est une étape classique des extractions liquide-liquide.

Dans un 1^{er} mode de réalisation de cette étape (d) de désextraction, la phase aqueuse mise en œuvre est une solution diluée d'acide de pH supérieur à 1. De nombreux acides peuvent convenir pour préparer une telle solution diluée d'acide, et à titre d'exemples non limitatifs on peut utiliser l'acide chlorhydrique, l'acide nitrique, ou l'acide sulfurique. En variante, la phase aqueuse mise en présence de la phase organique contenant le palladium présente initialement un pH neutre (i.e. pH compris entre 6,5 et 7,5) qui s'acidifie suite à cette mise en contact et au passage, dans la phase aqueuse, des acides et notamment de l'acide nitrique présent dans la phase organique suite à l'étape (c).

Dans un 2^{nd} mode de réalisation de cette étape de désextraction, la phase aqueuse utilisée contient un agent complexant du palladium propre à faciliter la migration en phase aqueuse du palladium contenu dans la phase organique suite à l'étape (c).

Avantageusement, cet agent complexant est choisi parmi les agents dont l'utilisation a déjà été proposée pour la réalisation d'extractions liquide-liquide. Un tel agent est typiquement capable de complexer le palladium contenu dans la phase organique obtenue suite à l'étape (c) du procédé. En particulier, cet agent complexant est choisi dans le groupe constitué par les composés à base de soufre tels que la thiourée, les sels de thiocyanate ou de thiosulfate, le métabisulfite de sodium ou de potassium ; les composés à base de chlorures comme l'acide chlorhydrique ou des solutions de chlorures de métal alcalin tels que du chlorure de lithium ; les composés azotés comme l'ammoniaque, les sels d'hydrazine, les sels d'hydroxylamine et leurs mélanges; le chlorure d'ammonium ; les composés chélatants dérivés de polyacides carboxyliques comme l'acide oxalique, l'EDTA, l'HEDTA et leurs mélanges.

A titre d'exemples particuliers et non exhaustifs, la phase aqueuse utilisée lors de ce 2^{nd} mode de réalisation de cette étape (d) de désextraction peut contenir de l'acide chlorhydrique à une concentration comprise entre 1 M et 8 M de phase aqueuse, et/ou de la thiourée en une quantité comprise entre 0,1 M et 2 M de phase aqueuse et/ou du thiosulfate en une quantité comprise entre 0,1 M et 2 M de phase aqueuse. Aussi, on peut employer une phase aqueuse à base d'ammoniaque, à une teneur comprise entre 1 et 4% (exemple ammoniaque 1 M).

Dans un 3^{ème} mode de réalisation de cette étape (d) de désextraction du palladium contenu dans la phase organique issue de l'étape (c), on effectue une récupération directe du palladium métal. Dans ce cas, on utilise une phase aqueuse comprenant un réducteur du palladium qui permet la précipitation de palladium métal sous forme de colloïdes à l'interphase des deux phases. Ces particules peuvent alors être séparées par toute technique de séparation liquide-solide adaptée, connue de l'homme du métier, comme, par exemple, une filtration ou une centrifugation. De nombreux agents réducteurs peuvent être utilisés dans ce 3^{ème} mode de réalisation. A titre d'exemples illustratifs et non limitatifs, on peut employer une solution d'hydrazine dans l'acide nitrique telle qu'une solution aqueuse d'acide nitrique diluée (0,1 M à 1 M) contenant de l'hydrazine 0,1 M ou une solution de formate de sodium ou de potassium.

Dans l'étape (d) du procédé selon l'invention, le rapport O/A entre la phase organique contenant le palladium et la phase aqueuse est compris entre 1/12 et 12, notamment entre 1/5 et 10, en particulier, entre 1/2 et 6, plus particulièrement entre 1 et 4 et, tout particulièrement, de l'ordre de 2 (i.e. 2 ± 0,5). De plus, la mise en contact la phase aqueuse et la phase organique contenant le palladium dure entre 5 min et 90 min, notamment entre 15 min et 60 min et, en particulier, de l'ordre de 30 min (i.e. 30 min ± 10 min).

L'étape (d) du procédé selon l'invention est réalisée à une température généralement inférieure à 50°C, en particulier inférieure à 40°C et, plus particulièrement, inférieure à 30°C. Avantageusement, la température lors de l'étape (d) du procédé selon l'invention est la température ambiante.

Suite à l'étape (d) du procédé selon l'invention et notamment suite au 1^{er} et au 2^{nd} modes de réalisation, il est facile de récupérer le palladium présent dans la phase aqueuse. Il est, par exemple, possible de récupérer du palladium sous forme métallique en soumettant les cations Pd²⁺ présents dans la phase aqueuse obtenue suite à l'étape (d) à une réduction. Cette réduction peut être effectuée suivant les nombreuses techniques disponibles et connues. A titre d'exemples illustratifs et non limitatifs, on peut effectuer cette réduction par voie électrochimique, ou encore par ajout de réactifs chimiques ayant un caractère réducteur, comme les sels de bore (borates, borohydrures...), l'acide formique ou ses sels, l'hydrazine. Le palladium réduit est apte à précipiter dans la phase aqueuse et ce précipité peut être récupéré par toute technique de séparation liquide-solide adaptée, connue de l'homme du métier, comme, par exemple, une filtration ou une centrifugation.

Il est aussi possible de récupérer le palladium(ll) sous forme de précipité selon l'agent complexant obtenu (2^{nd} mode de réalisation de l'étape (d)). A titre d'exemples illustratifs et non limitatifs, on peut récupérer le palladium sous forme de précipité d'hydroxyde de palladium(ll), de chlorure d'ammonium et de palladium(ll), de sulfite de palladium(ll), de disulfite de palladium(ll) et de sodium ou de potassium. Dans ce dernier cas, on effectuera avantageusement une précipitation à l'aide de chlorure d'ammonium.

De plus, suite à l'étape (d) du procédé selon l'invention, la phase organique contenant au moins un malonamide exempt d'atome de soufre peut être récupérée et réutilisée et ce, notamment dans un procédé de récupération sélective du palladium tel que défini dans la présente invention.

D'autres caractéristiques et avantages de la présente invention apparaîtront encore à l'homme du métier à la lecture des exemples ci-dessous donnés à titre illustratif et non limitatif, en référence aux figures annexées.

### BRÈVE DESCRIPTION DES DESSINS

La Figure 1 présente la simulation de la composition d'une phase organique résultant de l'extraction d'une phase aqueuse nitrique à 3 M de [HNO₃] chargée à hauteur de 100 mg/L en palladium et 2000 mg/L en fer par du DMDBTDMA à 0,5 M dans le toluène par un procédé décrit dans **[3]** à courants croisés en fonction du nombre d'étages.
La Figure 2 présente la simulation de la composition d'une phase organique résultant de l'extraction d'une phase aqueuse à 2 M de [HNO₃] chargée à hauteur de 100 mg/L en palladium et 2000 mg/L en fer par du DMDBTDMA à 0,4 M dans le toluène par un procédé décrit dans **[3]** à courants croisés en fonction du nombre d'étages.
La Figure 3 présente les coefficients de distribution de HNO₃ déterminés par titration des phases après équilibre.
La Figure 4 présente la modélisation de l'effet d'un lavage à l'eau sur la phase organique d'extraction (DMDBTDMA à 0,6 M) en fonction du rapport O/A.
La Figure 5 présente la modélisation de l'effet d'un lavage par une solution HNO₃ à 1 M sur la phase organique d'extraction (DMDBTDMA à 0,6 M) en fonction du ratio O/A.
La Figure 6 présente les résultats des différentes stratégies de lavage testées.

### EXPOSÉ DÉTAILLÉ DE MODES DE RÉALISATION PARTICULIERS

### I. Remarques préliminaires

Dans le cadre du procédé décrit dans **[3],** si on veut récupérer, en courants croisés, la totalité du palladium présent dans la phase organique suite à l'étape (b), il faut envisager un procédé à plusieurs étages i.e. un procédé dans lequel la mise en contact lors de l'étape (c) est répétée au moins deux fois.

Dans ce cas, même si la sélectivité reste constante, l'appauvrissement progressif de la phase aqueuse en palladium conduit à une baisse de la quantité de palladium extraite en phase organique au fur et à mesure des étages, alors que la quantité des impuretés extraites reste elle constante (mais faible). Ainsi, la pureté du palladium obtenu baissera avec le nombre d'étages.

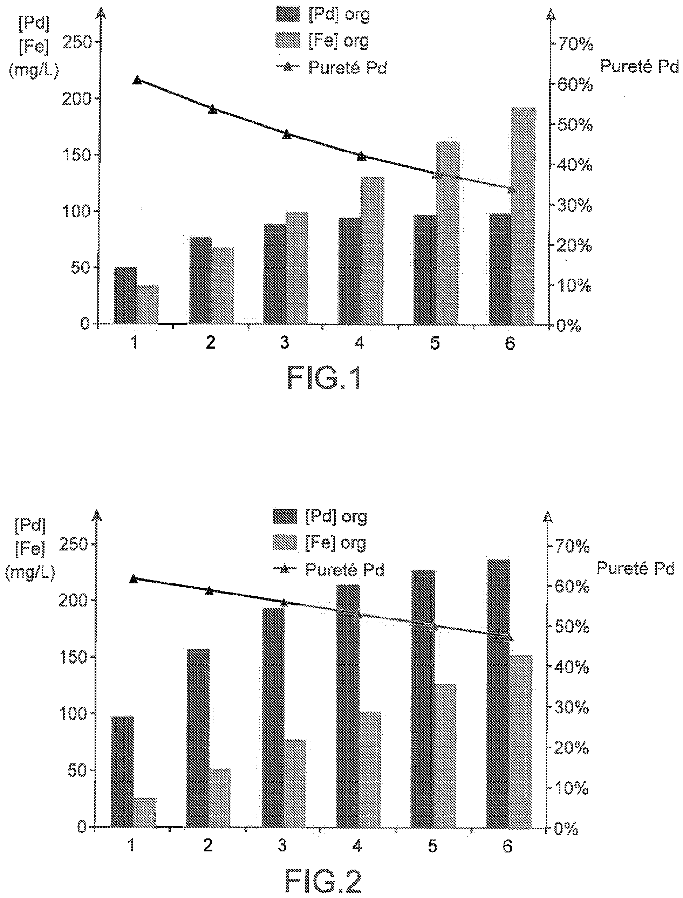

En outre, dans une solution réaliste, il y a au départ une quantité de fer bien supérieure au palladium, si bien que cet effet sera plus marqué. Il est possible d'ajuster le nombre d'étages en fonction du rapport volumique de la phase aqueuse sur la phase organique (rapport A/O) choisi et modifié par rapport au procédé décrit dans **[3]** (maximum 3), mais les simulations effectuées pour les conditions DMDBTDMA à 0,5 M / [HNO₃]_{aq} à 3 M avec un rapport A/O égal à 10 montrent que la pureté en palladium devient médiocre dès lors que l'on veut récupérer au moins 95%, voire 98% du palladium à partir d'un mélange réaliste (100 mg/L de palladium pour 2000 mg/L de fer, Figure 1).

Il est possible d'envisager des conditions pour lesquelles la sélectivité en faveur du palladium est meilleure ([HNO₃]_{aq} à 2 M, [DMDBTDMA] à 0,4 M où SPd/Fe = 120) et de ne chercher à récupérer que 90%, voire 95% du Pd (en travaillant avec un rapport A/O = 12), mais la pureté finale ne sera pas bien meilleure (Figure 2).

Il a donc été cherché à optimiser au niveau du laboratoire un éventuel procédé basé sur ces données en développant un procédé à courants croisés dans lequel la pureté du palladium récupéré repose sur des lavages sélectifs plutôt que sur une extraction sélective.

### II. Procédé de séparation du palladium selon l'invention

### 11.1. Stratégies de lavage

La stratégie proposée repose sur une sélectivité en faveur du palladium à des acidités comprises entre 1 et 2 M. En deçà le palladium n'est plus extrait de manière quantitative en phase organique, au-delà la sélectivité est moindre.

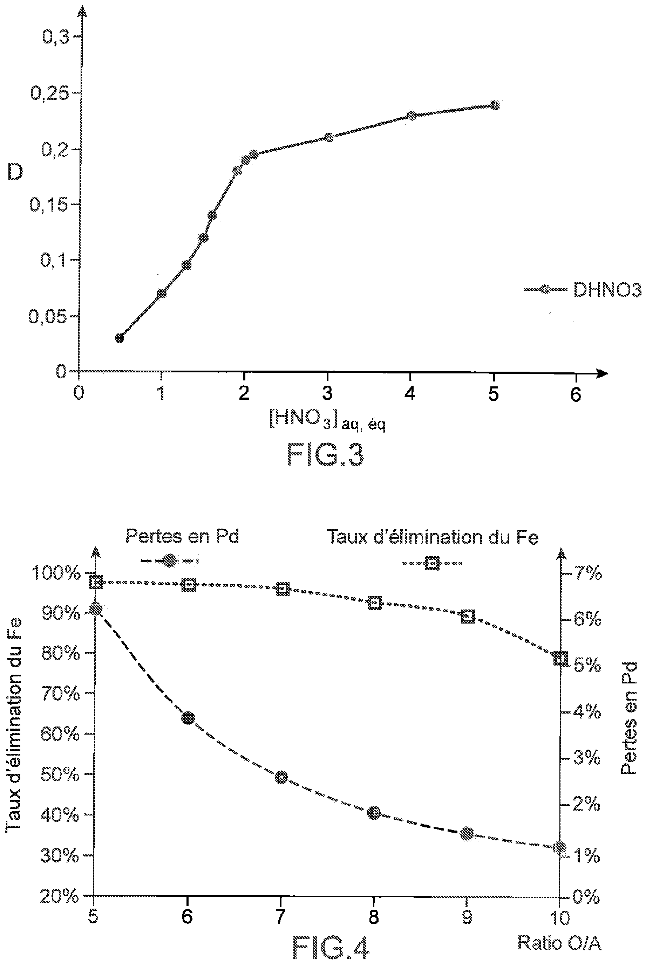

Après extraction (i.e. après l'étape (b) du procédé selon l'invention), la phase organique comprend aussi une certaine teneur en acide nitrique de l'ordre de 0,6 M à 0,65 M, si bien que la désextraction de ce dernier va modifier la concentration en HNO₃ de la phase aqueuse de lavage. La concentration en HNO₃ dans la phase aqueuse finale dépend donc de la teneur initiale en HNO₃ des deux phases ainsi que du rapport O/A employé. Les coefficients de distribution dépendant de la concentration finale [HNO₃]_{aq,f}, il est important de compléter les données acquises par les coefficients de distribution de HNO₃, surtout dans la zone de concentration [HNO₃]_{aq,f} ciblée (Figure 3).

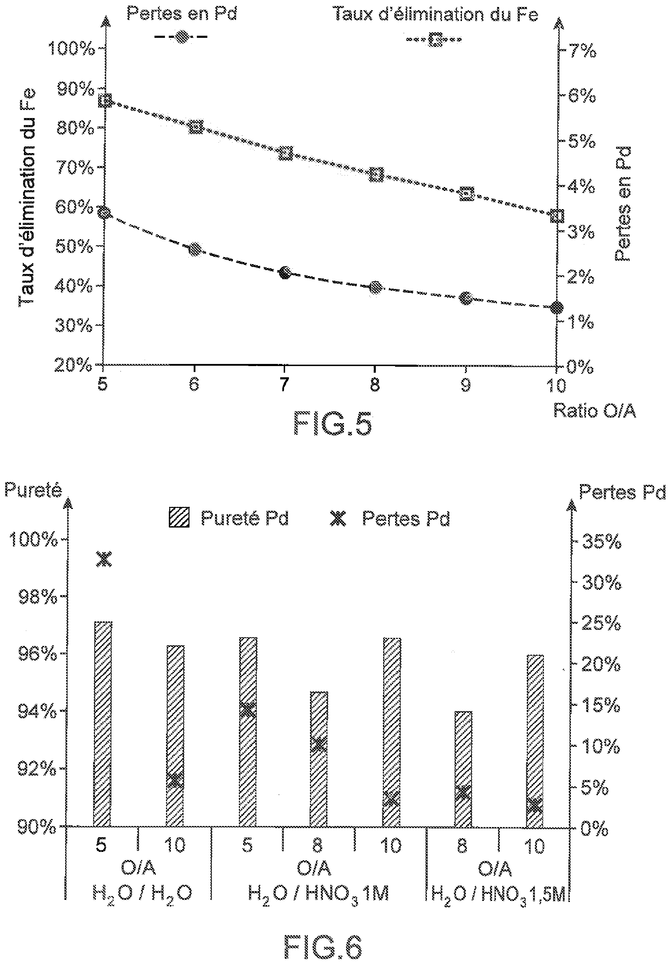

On constate une certaine variabilité des DHNO₃ entre 1 et 2 M. Il est néanmoins possible de calculer la concentration [HNO₃]_{aq,f} en fonction des données initiales, puis de modéliser DPd et DFe par calcul. On a ainsi modélisé l'effet d'un lavage à l'eau (Figure 4) et d'un lavage à HNO₃ 1 M (Figure 5) en fonction du ratio O/A employé.

Ces deux études montrent que dès un rapport O/A suffisant (environ 7 en courants croisés), il y a suffisamment de HNO₃ dans le système pour que les pertes en palladium soient minimes. En outre, le lavage à H₂O seul permet d'éliminer plus de fer, jusqu'à un rapport O/A de 7 à 8. Un premier lavage à H₂O seul a donc été choisi.

Aussi, l'influence de la concentration [HNO₃]_{aq,f} sur les coefficients de distribution de palladium et de fer est très forte entre 1,5 et 2 M, une très faible erreur sur DHNO₃ a par conséquent un fort impact sur ces coefficients de distribution. La stratégie complète de lavage a donc été optimisée expérimentalement, en se basant sur un premier lavage à H₂O, et un second lavage à H₂O ou HNO₃ 1 à 1,5 M, en faisant varier le rapport O/A (Figure 6).

Dans la zone de [HNO₃]_{aq,f} qui résulte de ces conditions, l'influence de [HNO₃]_{aq} est importante. Il peut être conclu que l'élimination du Fe par le rapport O/A ainsi que par la teneur résiduelle en HNO₃. Il a donc été opté pour un premier lavage à H₂O seul (avec O/A = 10), et un second lavage à HNO₃ 1M (avec là encore O/A = 10).

Notons finalement que quelques essais de lavage par une solution diluée de soude ont été effectués, sans amélioration notoire : la concentration optimale en soude est délicate à ajuster, car soit elle est trop faible et cela ne change rien par-rapport à un simple lavage à l'eau, soit elle est trop élevée et un risque important de précipitation d'hydroxydes métalliques (de palladium et fer) apparaît.

### II.2. Essai de validation avec tous les métaux (DEEE) et recyclage solvant

L'ensemble des conditions ainsi mises au point ont donc été enchaînées dans un essai de validation à l'échelle de la dizaine de mL sur une phase aqueuse nitrique à 3 M d'acide nitrique de départ contenant un mélange de palladium et de 5 autres cations métalliques (Fe, Cu, Ni, Al et Zn).

Cet essai repose sur deux extractions successives (10 min chacune) par une solution de DMDBTDMA à 0,6 M dans le toluène, un lavage à l'eau puis à HNO₃ à 1 M (O/A = 10), et une désextraction concentrante (O/A = 10) du palladium par une solution aqueuse de LiCl à 0,5 M (Tableau 1).

| **Métaux** | **Pd (mg/L)** | **Fe (mg/L)** | **Ni (mg/L)** | **Cu (mg/L)** | **Zn (mg/L)** | **Al (mg/L)** | **% pureté Pd** |
|---|---|---|---|---|---|---|---|
| Phase aqueuse initiale | 98 | 972 | 288 | 1942 | 484 | 484 | - |
| *[M]_{min.aq}* | *2,8* | *2,1* | *1,5* | *0,7* | *2,7* | *2,5* | |
| **Phase organique d'extraction (A/O=2;N=2;10min)** | 102 | 92 | <LQ | 27 | <LQ | <LQ | - |
| *[M]_{min.org}* | *3,5* | *2,6* | *1,9* | *0,9* | *3,4* | *3,1* | |
| **Phase organique après lavage H₂O (O/A=10;N=1;1H)** | 100 | 20 | <LQ | 1,7 | <LQ | <LQ | - |
| *[M]_{min.org}* | *3,5* | *2,6* | *1,9* | *0,9* | *3,4* | *3,1* | |
| **Phase organique après lavage HNO₃ 1,0M** (**O/A=10;N=1;1H)** | 100 | 3,2 | <LQ | <LQ | <LQ | <LQ | - |
| *[M]_{min.org}* | *3,5* | *2,5* | *1,9* | *0,9* | *3,4* | *3,1* | |
| Phase aqueuse après désextraction LlCl 0,5M (O/A=10;N=1;1H) | 854 | 5 | <LQ | <LQ | <LQ | <LQ | 99% |
| *[M]_{min.aq}* | *2,8* | *2,1* | *1,5* | *0,7* | *2,7* | *2,5* | |
| **"Nouvelle Phase organique"-Nouveau cycle-(A/O=2;N=2;10min)** | 132 | 188 | <LQ | 23 | <LQ | <LQ | - |
| *[M]_{min.org}* | *3,5* | *2,6* | *1,9* | *0,9* | *3,4* | *3,1* | |
| Avec: | [M]_{min.aq}=LQ*FD_{aq} | | | | | | |
| | [M]_{min,org}=LQ*FD_{org} | | | | | | |

Tableau 1 : Caractéristiques des différentes phases lors des différentes étapes du procédé de séparation du palladium effectué au laboratoire

Une solution aqueuse de palladium, chargée à 0,85 g/L, avec une pureté du palladium supérieure à 99% (99,4 %) est obtenue. Le taux de récupération du palladium est de 87%, sachant que les 13% restant restent dans le solvant d'extraction qui peut être ré-employé.

Seul le fer est détecté en quantité minime dans la solution de palladium. Le cuivre est détecté dans le solvant d'extraction, mais il est éliminé lors du lavage. Lors du second lavage (par HNO₃ à 1 M), on ne détecte dans la phase aqueuse de lavage que du fer en quantité importante, accompagné par des traces de cuivre et de palladium (5 et 30 mg/L respectivement, correspondant à 0,03 et 0,3% respectivement de la quantité initiale présente en phase aqueuse). Le solvant récupéré a finalement été évalué lors d'un autre cycle d'extraction (Tableau 2).

**Tableau 2 : Résultats comparés de l'extraction de la phase aqueuse de départ par le solvant neuf (pré-équilibré) et le solvant issu d'un premier cycle extraction-lavage (désextraction)**

| | | **Pd (mg/L)** | **Fe (mg/L)** | **Ni (mg/L)** | **Cu (mg/L)** | **Zn (mg/L)** | **Al (mg/L)** |
|---|---|---|---|---|---|---|---|
| Extraction par le solvant neuf | [M]_{aq} (mg/L) | (0,69) | 821 | 269 | 1784 | 456 | 452 |
| | % d'extraction global | 99,3% | 16% | 7% | 8% | 6% | 7% |
| Extraction par le solvant recyclé | [M]_{aq} (mg/L) | (1,51) | 753 | 275 | 1822 | 466 | 465 |
| | % d'extraction global | 98,5% | 23% | 4% | 6% | 4% | 4% |

L'efficacité est comparable, sachant que le solvant neuf avait été pré-équilibré, il est délicat de faire un comparatif précis. Néanmoins on constate une extraction plus importante du fer : il est possible que la cinétique soit quelque peu modifiée selon l'historique du solvant.

### RÉFÉRENCES BIBLIOGRAPHIQUES

**[1]** Poirot, Bourgeois, Meyer. Palladium extraction by a malonamide derivative (DMDOHEMA) from nitrate media: extraction behavior and third phase characterization. Solv. Extr. Ion Exch., 2014, 32, 529-542.
**[2]** Sypula, Wilden, Schreinemachers, Malmbeck, Geist, Taylor, Modolo. Use of Polyaminocarboxylic Acids as Hydrophilic Masking Agents for Fission Products in Actinide Partitioning Processes. Solv. Extr. Ion Exch., 2012, 30, 748-764.
**[3]** Demande internationale WO 2016/008932 aux noms du CEA et du CNRS publiée le 21 janvier 2016.
**[4]** Pearson. Hard and Soft Acids and Bases. J. Am. Chem. Soc., 1963, 85, 3533-3539.
**[5]** Jung, Park, An, Kim, Tran, Kim. Processing of high purity gold from scraps using diethylene glycol di-N-butyl ether (dibutyl carbitol). Hydrometallurgy, 2009, 95, 262-266.

## Revendications

1. Procédé pour récupérer le palladium à partir d'une phase aqueuse nitrique qui contient, en plus du palladium, au moins un autre cation métallique dont la valence est supérieure ou égale à 2, ledit procédé comprenant les étapes suivantes consistant à :
a) éventuellement la dilution de la phase aqueuse nitrique qui contient, en plus du palladium, au moins un autre cation métallique dont la valence est supérieure ou égale à 2 de manière à ce que la concentration en acide nitrique contenue dans cette phase aqueuse nitrique après dilution soit au plus de 3 mol.L⁻¹ ;
b) l'extraction du palladium de ladite phase aqueuse nitrique éventuellement diluée à l'étape (a), laquelle extraction comprend au moins une opération dans laquelle ladite phase aqueuse nitrique est mise en contact avec une phase organique non miscible à elle, contenant au moins un malonamide exempt d'atome de soufre en tant qu'extractant, puis séparée de cette phase organique ;
c) la désextraction d'au moins un autre cation métallique dont la valence est supérieure ou égale à 2 présent dans la phase organique issue de l'étape (b), laquelle désextraction comprend au moins une opération dans laquelle la phase organique issue de l'étape (b) est mise en contact avec une phase aqueuse, le rapport O/A où le rapport O/A est défini comme le rapport entre le volume ou le débit de la phase organique O et le volume ou le débit de la phase aqueuse A, lors de cette mise en contact étant supérieur ou égal à 4 ; puis
d) la désextraction sélective du palladium présent dans la phase organique issue de l'étape (c), laquelle désextraction comprend au moins une opération dans laquelle la phase organique issue de l'étape (c) est mise en contact avec une phase aqueuse, puis séparée de cette phase aqueuse.

2. Procédé selon la revendication 1, **caractérisé en ce que** la quantité d'acide nitrique dans la phase aqueuse nitrique est inférieure ou égale à 2,5 mol.L⁻¹ et notamment comprise entre 0,1 mol.L⁻¹ et 2 mol.L⁻¹.

3. Procédé selon la revendication 1 ou 2, **caractérisé en ce que** ladite phase aqueuse nitrique est issue du traitement des déchets d'équipements électriques et électroniques.

4. Procédé selon l'une quelconque des revendications 1 à 3, **caractérisé en ce que** ladite phase aqueuse nitrique comprend non seulement du palladium mais aussi au moins un élément métallique choisi dans le groupe constitué par le fer (Fe), le cuivre (Cu), le zinc (Zn), l'aluminium (Al), le plomb (Pb), le nickel (Ni), l'argent (Ag), le cobalt (Co), le néodyme (Nd), le lanthane (La), le dysprosium (Dy), l'ytterbium (Yb) et le chrome (Cr).

5. Procédé selon l'une quelconque des revendications 1 à 4, **caractérisé en ce que** ledit malonamide exempt d'atome de soufre est un diamide substitué de formule (I) :
R¹(R²)N-C(=O)-CH(R³)-C(=O)-N(R⁴)R⁵ (I)
dans laquelle les groupements R¹, R², R³, R⁴ et R⁵, identiques ou différents, représentent un alkyle ou un hétéroalkyle exempt d'atome de soufre.

6. Procédé selon l'une quelconque des revendications 1 à 5, **caractérisé en ce que** ledit malonamide exempt d'atome de soufre est choisi dans le groupe constitué par le *N,N'*-diméthyl-*N,N'*-dibutγltétradécylmalonamide (ou DMDBTDMA), le *N,N'*-diméthyl-*N,N'*-dioctylhexyléthoxymalonamide (ou DMDOHEMA), le *N,N'*-diméthyl-*N,N'*-dioctyloctylmalonamide (ou DMDOOMA), le *N,N'*-diméthyl-N,N'-dioctylhexylmalonamide (ou DMDOHxMA), le *N,N'*-diméthyl-*N,N'-*dioctylheptylmalonamide (ou DMDOHpMA), le *N,N'*-diméthyl-*N,N'*-dibutyl-dodécylmalonamide (ou DMDBDDEMA) et le N,N'-diméthyl-*N,N'*-dibutyl-tetradécylmalonamide (ou DMDBTDEMA).

7. Procédé selon l'une quelconque des revendications 1 à 6, **caractérisé en ce que** la phase aqueuse mise en œuvre lors de ladite étape (c) est soit de l'eau, soit une solution aqueuse d'acide nitrique.

8. Procédé selon l'une quelconque des revendications 1 à 7, **caractérisé en ce que**, lors de ladite étape (c), l'opération de mise en contact de la phase organique avec une phase aqueuse peut être répétée au moins une fois.

9. Procédé selon l'une quelconque des revendications 1 à 8, **caractérisé en ce que** ladite étape (c) comprend deux opérations de mise en contact et que de l'eau est utilisée comme phase aqueuse lors de la 1^{ère} mise en contact puis une solution aqueuse d'acide nitrique est utilisée comme phase aqueuse lors de la 2^{nde} mise en contact.

10. Procédé selon l'une quelconque des revendications 1 à 9, **caractérisé en ce que**, lors de ladite étape (c), ledit rapport O/A est inférieur à 7 et notamment inférieur à 6 et, en particulier, inférieur à 5.

11. Procédé selon l'une quelconque des revendications 1 à 9, **caractérisé en ce que**, lors de ladite étape (c), ledit rapport O/A est supérieur ou égal à 7, notamment supérieur à 7 et inférieur ou égal à 10 et, en particulier, supérieur ou égal à 8 et inférieur ou égal à 10.

12. Procédé selon l'une quelconque des revendications 1 à 10, **caractérisé en ce que** ladite phase aqueuse mise en œuvre lors de ladite étape (d) est une solution diluée d'acide de pH supérieur à 1.

13. Procédé selon l'une quelconque des revendications 1 à 10, **caractérisé en ce que** ladite phase aqueuse mise en œuvre lors de ladite étape (d) comprend un agent complexant du palladium notamment choisi dans le groupe constitué par les composés à base de soufre tels que la thiourée, les sels de thiocyanate ou de thiosulfate, le métabisulfite de sodium ou de potassium ; les composés à base de chlorures comme l'acide chlorhydrique ou des solutions de chlorures de métal alcalin ; les composés azotés comme l'ammoniaque, les sels d'hydrazine, les sels d'hydroxylamine et leurs mélanges; le chlorure d'ammonium ; les composés chélatants dérivés de polyacides carboxyliques comme l'acide oxalique, l'EDTA, l'HEDTA et leurs mélanges.

14. Procédé selon l'une quelconque des revendications 1 à 10, **caractérisé en ce que** ladite phase aqueuse mise en œuvre lors de ladite étape (c) comprend un réducteur du palladium.

## Patentansprüche

1. Verfahren zur Rückgewinnung von Palladium aus einer wässrigen Stickstoffphase, die neben Palladium mindestens ein weiteres Metallkation enthält, dessen Wertigkeit größer oder gleich 2 ist, wobei das Verfahren die folgenden Schritte umfasst:
a) gegebenenfalls Verdünnen der wässrigen Stickstoffphase, die neben Palladium mindestens ein weiteres Metallkation enthält, dessen Wertigkeit größer oder gleich 2 ist, so dass die Konzentration der in dieser wässrigen Stickstoffphase enthaltenen Salpetersäure nach dem Verdünnen höchstens 3 mol.L⁻¹ beträgt;
b) Extraktion von Palladium aus der wässrigen, gegebenenfalls in Schritt (a) verdünnten Stickstoffphase, wobei die Extraktion mindestens einen Vorgang umfasst, bei dem die wässrige Stickstoffphase mit einer damit nicht mischbaren organischen Phase in Kontakt gebracht wird, die mindestens ein schwefelatomfreies Malonamid als Extraktionsmittel enthält, und dann von dieser organischen Phase getrennt wird;
c) Rückextraktion mindestens eines weiteren Metallkations, dessen Wertigkeit größer oder gleich 2 ist und das in der aus Schritt (b) resultierenden organischen Phase vorhanden ist, wobei die Rückextraktion mindestens einen Vorgang umfasst, bei dem die aus Schritt (b) resultierende organische Phase mit einer wässrigen Phase in Kontakt gebracht wird, wobei das O/A-Verhältnis bei diesem In-Kontakt-Bringen größer oder gleich 4 ist, wobei das O/A-Verhältnis definiert ist als Verhältnis zwischen dem Volumen bzw. dem Durchsatz der organischen Phase O und dem Volumen bzw. Durchsatz der wässrigen Phase A; dann
d) selektive Rückextraktion von in der aus Schritt (c) resultierenden organischen Phase vorhandenem Palladium, wobei die Rückextraktion mindestens einen Vorgang umfasst, bei dem die aus Schritt (c) resultierende organische Phase mit einer wässrigen Phase in Kontakt gebracht und dann von dieser wässrigen Phase getrennt wird.

2. Verfahren nach Anspruch 1, **dadurch gekennzeichnet, dass** die Menge an Salpetersäure in der wässrigen Stickstoffphase kleiner oder gleich 2,5 mol.L⁻¹ ist und insbesondere zwischen 0,1 mol.L⁻¹ und 2 mol.L⁻¹ liegt.

3. Verfahren nach Anspruch 1 oder 2, **dadurch gekennzeichnet, dass** die wässrige Stickstoffphase aus der Entsorgung von Elektro- und Elektronik-Altgeräten stammt.

4. Verfahren nach einem der Ansprüche 1 bis 3, **dadurch gekennzeichnet, dass** die wässrige Stickstoffphase nicht nur Palladium, sondern auch mindestens ein metallisches Element enthält, das ausgewählt ist aus der Gruppe umfassend Eisen (Fe), Kupfer (Cu), Zink (Zn), Aluminium (Al), Blei (Pb), Nickel (Ni), Silber (Ag), Kobalt (Co), Neodym (Nd), Lanthan (La), Dysprosium (Dy), Ytterbium (Yb) und Chrom (Cr).

5. Verfahren nach einem der Ansprüche 1 bis 4, **dadurch gekennzeichnet, dass** das schwefelatomfreie Malonamid ein substituiertes Diamid der Formel (I) ist:
R¹(R²)N-C(=O)-CH(R³)-C(=O)-N(R⁴)R⁵ (I)
worin die Gruppen R¹, R², R³, R⁴ und R⁵, die gleich oder verschieden sein können, ein Alkyl oder Heteroalkyl ohne Schwefelatom darstellen.

6. Verfahren nach einem der Ansprüche 1 bis 5, **dadurch gekennzeichnet, dass** das schwefelatomfreie Malonamid ausgewählt ist aus der Gruppe umfassend *N,N'*-Dimethyl-*N,N'*-Dibutyltetradecylmalonamid (oder DMDBTDMA), *N,N'*-Dimethyl-*N,N'*-Dioctylhexylethoxymalonamid (oder DMDOHEMA), *N,N'*-Dimethyl-*N,N'*-Dioctyloctylmalonamid (oder DMDOOMA), *N,N'*-Dimethyl-*N,N'*-Dioctylhexylmalonamid (oder DMDOHxMA), *N,N'-*Dimethyl-*N,N'*-Dioctylheptylmalonamid (oder DMDOHpMA), *N,N'*-Dimethyl-*N,N'*-Dibutyldodecylmalonamid (oder DMDBDDEMA) und *N,N'*-Dimethyl-*N,N'-*Dibutyltetradecylmalonamid (oder DMDBTDEMA).

7. Verfahren nach einem der Ansprüche 1 bis 6, **dadurch gekennzeichnet, dass** die in Schritt (c) verwendete wässrige Phase entweder Wasser oder eine wässrige Salpetersäurelösung ist.

8. Verfahren nach einem der Ansprüche 1 bis 7, **dadurch gekennzeichnet, dass** in Schritt (c) der Vorgang des In-Kontakt-Bringens der organischen Phase mit einer wässrigen Phase mindestens einmal wiederholt werden kann.

9. Verfahren nach einem der Ansprüche 1 bis 8, **dadurch gekennzeichnet, dass** Schritt (c) zwei Vorgänge des In-Kontakt-Bringens umfasst und dass beim ersten In-Kontakt-Bringen Wasser als wässrige Phase verwendet wird und dann beim zweiten In-Kontakt-Bringen eine wässrige Salpetersäurelösung als wässrige Phase verwendet wird.

10. Verfahren nach einem der Ansprüche 1 bis 9, **dadurch gekennzeichnet, dass** in Schritt (c) das O/A-Verhältnis kleiner als 7 und insbesondere kleiner als 6 und insbesondere kleiner als 5 ist.

11. Verfahren nach einem der Ansprüche 1 bis 9, **dadurch gekennzeichnet, dass** in Schritt (c) das O/A-Verhältnis größer oder gleich 7, insbesondere größer als 7 und kleiner oder gleich 10 und insbesondere größer oder gleich 8 und kleiner oder gleich 10 ist.

12. Verfahren nach einem der Ansprüche 1 bis 10, **dadurch gekennzeichnet, dass** die wässrige Phase, die in Schritt (d) eingesetzt wird, eine verdünnte Säurelösung mit einem pH-Wert größer als 1 ist.

13. Verfahren nach einem der Ansprüche 1 bis 10, **dadurch gekennzeichnet, dass** die wässrige Phase, die in Schritt (d) eingesetzt wird, einen Palladiumkomplexbildner enthält, der insbesondere ausgewählt ist aus der Gruppe umfassend Verbindungen auf Schwefelbasis wie Thioharnstoff, Thiocyanat- oder Thiosulfatsalzen, Natrium- oder Kaliummetabisulfit; Verbindungen auf Chloridbasis wie Salzsäure oder Alkalimetallchloridlösungen; stickstoffhaltige Verbindungen wie Ammoniak, Hydrazinsalze, Hydroxylaminsalze und deren Gemische; Ammoniumchlorid; von Polycarbonsäuren abgeleitete chelatbildende Verbindungen wie Oxalsäure, EDTA, HEDTA und deren Gemische.

14. Verfahren nach einem der Ansprüche 1 bis 10, **dadurch gekennzeichnet, dass** die in Schritt (c) eingesetzte wässrige Phase ein Palladium-Reduktionsmittel enthält.

## Claims

1. Method for recovering palladium from a nitric aqueous phase that contains, in addition to palladium, at least one other metal cation of which the valency is greater than or equal to 2, said method comprising the following steps of:
a) optionally diluting the nitric aqueous phase that contains, in addition to palladium, at least one other metal cation of which the valency is greater than or equal to 2 in such a way that the concentration in nitric acid contained in this nitric aqueous phase after dilution is at most 3 mol.L⁻¹;
b) extracting palladium from said nitric aqueous phase optionally diluted in step (a), said extracting comprises at least one operation in which said nitric aqueous phase is put into contact with an organic phase that is not miscible with it, containing at least one malonamide free of sulphur atoms as an extractant, then separated from this organic phase;
c) back-extracting at least one other metal cation of which the valency is greater than or equal to 2 present in the organic phase stemming from step (b), which back-extracting comprises at least one operation in which the organic phase stemming from step (b) is put into contact with an aqueous phase, the O/A ratio during this putting into contact being greater than or equal to 4, wherein the O/A ratio is defined as the ratio between the volume or the flow rate of the organic phase O and the volume or the flow rate of the aqueous phase A,; then
d) selectively back-extracting the palladium present in the organic phase stemming from step (c), which back-extracting comprises at least one operation in which the organic phase stemming from step (c) is put into contact with an aqueous phase, then separated from this aqueous phase.

2. Method according to claim 1, **characterised in that** the quantity of nitric acid in the nitric aqueous phase is less than or equal to 2.5 mol.L⁻¹ and notably comprised between 0.1 mol.L⁻¹ and 2 mol.L⁻¹.

3. Method according to claim 1 or 2, **characterised in that** said nitric aqueous phase stems from the treatment of waste electrical and electronic equipment.

4. Method according to any of claims 1 to 3, **characterised in that** said nitric aqueous phase comprises not only palladium but also at least one metal element selected from the group consisting of iron (Fe), copper (Cu), zinc (Zn), aluminium (Al), lead (Pb), nickel (Ni), silver (Ag), cobalt (Co), neodymium (Nd), lanthanum (La), dysprosium (Dy), ytterbium (Yb) and chromium (Cr).

5. Method according to any of claims 1 to 4, **characterised in that** said malonamide free of sulphur atoms is a substituted diamide of formula (I):
R¹(R²)N-C(=O)-CH(R³)-C(=O)-N(R⁴)R⁵ (I)
in which the R¹, R², R³, R⁴ and R⁵ groups, identical or different, represent an alkyl or a heteroalkyl free of sulphur atoms.

6. Method according to any of claims 1 to 5, **characterised in that** said malonamide free of sulphur atoms is selected from the group consisting of *N,N'*-dimethyl-*N,N'*-dibutyltetradecylmalonamide (or DMDBTDMA), *N,N'*-dimethyl-*N,N'-*dioctylhexylethoxymalonamide (or DMDOHEMA), *N,N'*-dimethyl-*N,N'-*dioctyloctylmalonamide (or DMDOOMA), *N,N'*-dimethyl-*N,N'*-dioctylhexylmalonamide (or DMDOHxMA), *N,N'*-dimethyl-*N,N'*-dioctylheptylmalonamide (or DMDOHpMA), *N,N'-*dimethyl-*N,N'*-dibutyl-dodecylmalonamide (or DMDBDDEMA) and *N,N'*-dimethyl-*N,N'-*dibutyl-tetradecylmalonamide (or DMDBTDEMA).

7. Method according to any of claims 1 to 6, **characterised in that** the aqueous phase implemented during said step (c) is either water, or an aqueous solution of nitric acid.

8. Method according to any of claims 1 to 7, **characterised in that**, during said step (c), the operation of putting the organic phase into contact with an aqueous phase can be repeated at least once.

9. Method according to any of claims 1 to 8, **characterised in that** said step (c) comprises two operations of putting into contact and that the water is used as an aqueous phase during the 1^{st} putting into contact then an aqueous solution of nitric acid is used as an aqueous phase during the 2^{nd} putting into contact.

10. Method according to any of claims 1 to 9, **characterised in that**, during said step (c), said O/A ratio is less than 7 and notably less than 6 and, in particular, less than 5.

11. Method according to any of claims 1 to 9, **characterised in that**, during said step (c), said O/A ratio is greater than or equal to 7, notably greater than 7 and less than or equal to 10 and, in particular, greater than or equal to 8 and less than or equal to 10.

12. Method according to any of claims 1 to 10, **characterised in that** said aqueous phase implemented during said step (d) is a diluted solution of acid with a pH greater than 1.

13. Method according to any of claims 1 to 10, **characterised in that** said aqueous phase implemented during said step (d) comprises a palladium complexing agent notably selected from the group consisting of sulphur based compounds such as thiourea, thiocyanate or thiosulphate salts, sodium or potassium metabisulphite; chloride based compounds such as hydrochloric acid or solutions of alkali metal chlorides; nitrogen compounds such as ammonia, hydrazine salts, hydroxylamine salts and mixtures thereof; ammonium chloride; chelating compounds derived from carboxylic polyacids such as oxalic acid, EDTA, HEDTA and mixtures thereof.

14. Method according to any of claims 1 to 10, **characterised in that** said aqueous phase implemented during said step (c) comprises a palladium reducer.
